# EUROPEAN PATENT SPECIFICATION

(11) **EP 1 477 062 B1**
(45) Date of publication and mention of the grant of the patent: **07.01.2009**
(21) Application number: 04076333.6
(22) Date of filing: 03.05.2004
(51) Int. Cl.: A01M 7/00, A01C 23/00

(54) **Motor-operated valve for fluid shutoff**
Motorgetriebenes Ventil zum Absperren von Flüssigkeiten
Soupape d'arrêt pour fluides commandée par moteur

(30) Priority: 13.05.2003 IT RE20030047
(43) Date of publication of application: 17.11.2004
(73) Proprietor: Tecomec S.P.A., 42011 Bagnolo in Piano (Reggio Emilia) (IT)
(72) Inventor: Capiluppi, Giacomo, 42011 Bagnolo in Piano (Reggio Emilia) (IT); Galloni, Fausto, 42011 Bagnolo in Piano (Reggio Emilia) (IT)
(74) Representative: Corradini, Corrado

(56) References cited:
- EP-A- 0 357 154
- FR-A- 2 615 584
- US-A- 1 377 654
- US-A- 4 475 496

## Description

The present invention relates in general to fluid passage shutoff valves and specifically to the valve operating means.

The invention particularly relates to valves for shutting off spray liquids in agricultural machines, which operate with pressures up to 40 bar.

Valves are known comprising a body provided with a fluid inlet conduit and fluid outlet conduit separated by a valving element acting within a valve seat. The valving element can translate between an open position in which it is spaced from said valve seat to hence enable the fluid to pass, and a closed position in which it is in contact with said seat to shut off fluid passage.

The valving element is operated by a male-female screw mechanism associated with an electric motor.

This mechanism enables the valving element to be moved from said first to said second position, but although being effective is slow in certain applications.

In particular, in an operating mechanism such as that described, the valve opening rate is constant and is limited by the maximum force which the motor is able to transmit to overcome resistance at the instant the valving element opens (the instant in which the resistance is a maximum). Moreover these male-female screw mechanisms are complicated to assemble and dismantle, are costly and in particular are complicated to mount and demount if the final user has to carry out maintenance or replace the motor.

EP 0 357 154 shows a motor-operated valve for fluid shutoff that comprises a mobile valve element apt to intercept the fluid and which is acted upon by a motor through connection means, which can position it in an open position with respect to the valve seat in which fluid passage is enabled, and in a closed position in which it shuts off fluid passage. The mechanical means comprise an eccentrical cam element rigid with said motor and a cam follower associated with said valving element, which has a portion into contact with said cam.

The object of the present invention is to overcome the aforesaid drawbacks of the known art within the framework of a simple and rational low-cost solution.

The invention attains said object by virtue of the features defined in claim 1.

In particular, the invention provides a motor-operated valve for fluid shutoff comprising a fluid inlet conduit and at least one fluid outlet conduit, and a movable valving element operated by a motor via mechanical connection means arranged to position it between an open position in which fluid passage is enabled, and a closed position in which it shuts off fluid passage. Said mechanical means comprise at least one cam element associated with said motor and a cam follower associated with said valving element.

In a preferred embodiment, said cam element is an eccentric circular cam, said cam follower being associated with said cam element by means of a bilateral connection. Said cam follower is in the form of a perimetral frame able to internally receive said cam element.

The use of mechanical cam means, according to the invention, for opening the valving element has the advantage that the rate of opening of the valving element varies on the basis of the angular position of the motor shaft, in accordance with a particularly advantageous criterion. In this respect, at the instant the valving element opens, the motor rotation produces relatively small movements of the valving element, such that the valving element opening rate is low at the point of greatest motor force, hence avoiding motor strain. After the valving element has separated from the valve seat and the resistance to overcome is relatively small, said cam means provide a greater valving element opening rate for equal motor rotation speeds. All this is advantageously obtained by virtue of a particular cam profile, i.e. by using an eccentric circular cam with suitable choice of the cam eccentricity.

In a first embodiment of the invention, said valving element is normally maintained against the valve seat by a spring and is therefore associated with said cam follower only during valve opening. In a variant of the invention, the valving element is rigid with said cam follower both during valve opening and during valve closure.

Finally in a further variant of the invention, said valve is provided with at least two outlet conduits, with each of which a valving element is associated, said valving elements being both connected to the same cam follower.

In order to better clarify the constructional and operational characteristics of the invention a preferred embodiment thereof is described hereinafter by way of non-limiting example, with reference to the accompanying drawings.

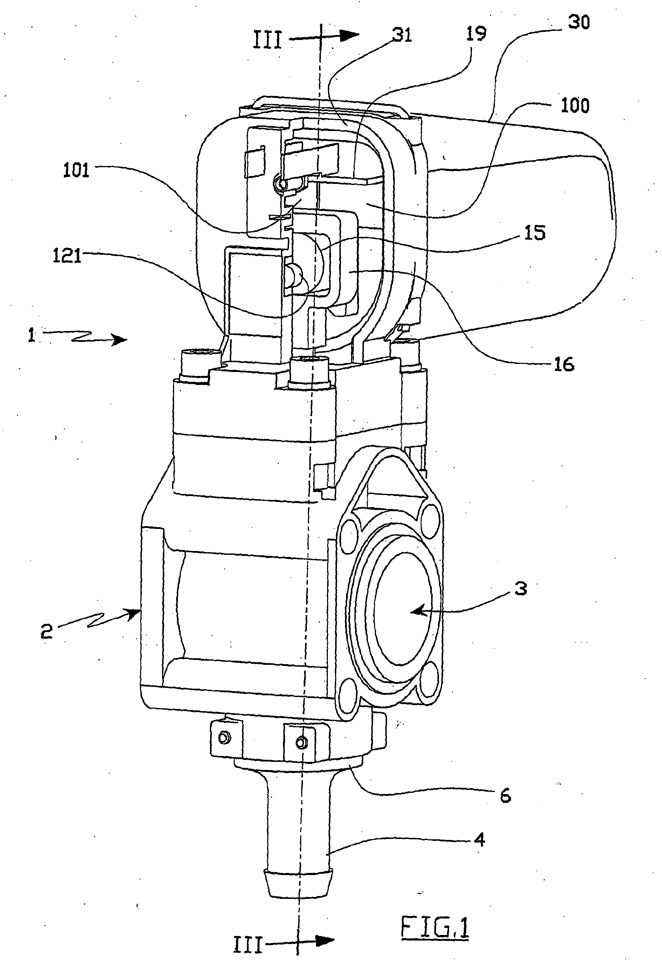

Figure 1 is a first perspective view of the valve of the invention, shown partly sectioned.

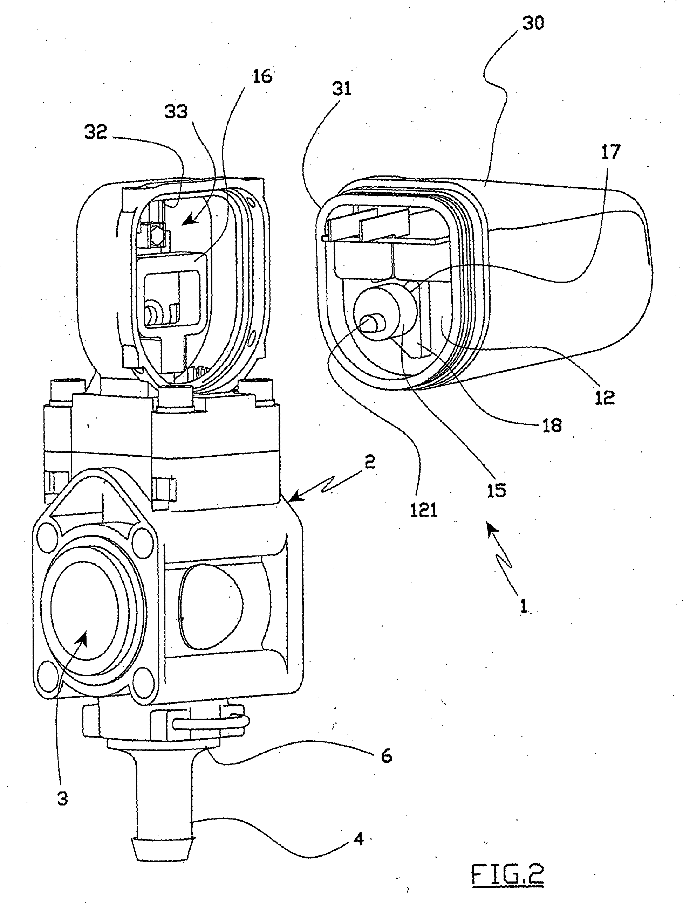

Figure 2 is a perspective view of Figure 1 shown partly exploded into two parts, said two parts being mutually rotated to better display the characteristics of the invention.

Figure 3 is the section III-III of Figure 1.

Figure 3A is an enlarged detail of Figure 3 with the valving element in its open position.

Figure 4 is the section IV-IV of Figure 3.

Figure 5 is a section, similar to Figure 3, through a variant of the invention. Said figures show the valve 1, comprising a body 2 provided with a fluid inlet conduit 3 and a fluid outlet conduit 4.

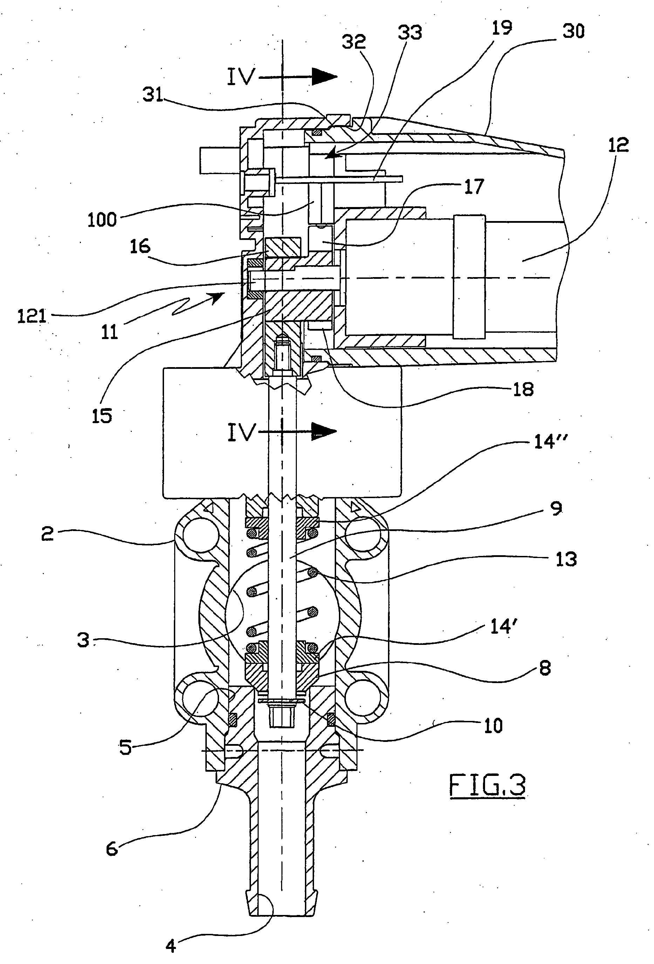

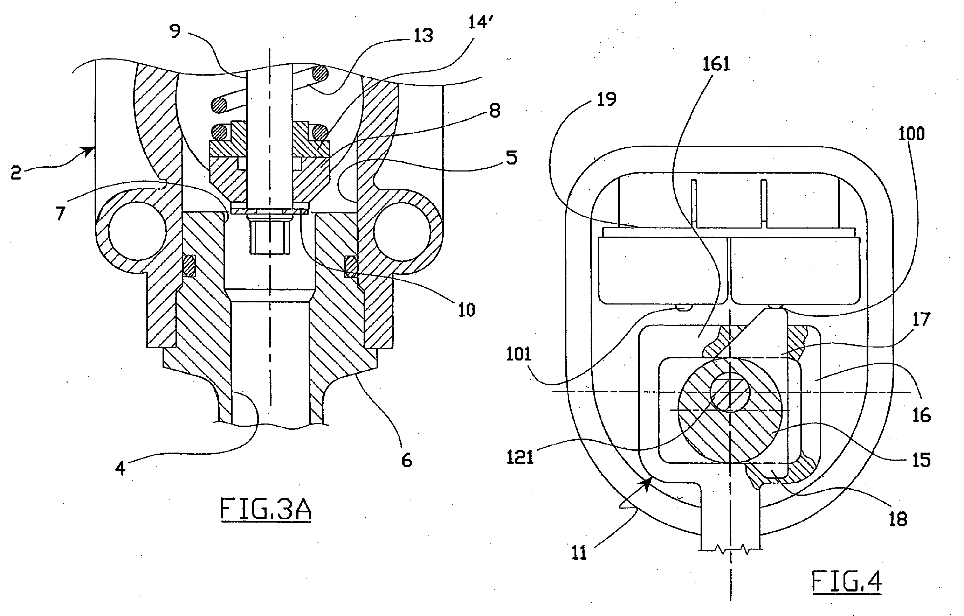

With reference to Figure 3, the body 2 presents a central cavity 5 partially receiving a part 6 which centrally presents said outlet conduit 4 and is rigid with the body 2 by usual means, not shown.

On that edge of the outlet conduit 4 which faces the interior of the cavity 5, there is provided a valve seat 7 on which a valving element 8 acts. The valving element 8 is mounted on a stem 9 the lower end of which carries a travel limit ring 10, and the upper end of which emerges from the body 2 of the valve 1 to be associated with means 11 for its connection to a motor 12 producing translation of the valving element 8.

The valving element 8 is normally maintained resting against a valve seat 7 by a spring 13 mounted on the stem 9 and lying between two identical centering elements 14' and 14", of which the element 14' rests on the valving element 8 and the element 14" rests on a stub on the body 2, partly visible in Figure 3.

The invention relates to the mechanical connection means 11 which connect the stem 9 to the motor 12. These means comprise an eccentric circular cam mounted on the shaft 121 of the motor 12 and rotating rigidly therewith.

The cam 15 is inserted as an exact fit into a cam follower, configured as a rectangular frame 16, which lowerly presents a central stub for its connection to the end of the stem 9.

The frame 16 extends in a plane perpendicular to the axis of the shaft 121 and common with the plane in which the cam 15 extends, and is constantly urged by the action of the spring 13 to rest against the cam 15 via the inner face of the upper side 161 of the frame 16.

The valve closed position (see Figure 4) is defined when the axis of the shaft 121 lies at its minimum distance from said inner face of the upper side 161; in said configuration, the vertical axis which in Figure 4 intersects the axis of the shaft 121 is also the axis of symmetry of the cam 15. After a rotation of 180°, the axis of the shaft 121 lies at its maximum distance from said inner face of the upper side 161; in that position the stem 9 and with it the valving element 8 are raised to a maximum extent from the valve seat 7, the valve therefore being in its open position (see Figure 3A).

In operation, on rotating the shaft 121 from said valve closed position (shown in Figure 4), equal rotations of the shaft initially provide relatively small movements of the valving element (and hence minimum motor strain), during which the initial separation of the valving element from the valve seat occurs while overcoming maximum resistance. Following separation of the valving element from the valve seat, when the resistance to be overcome is relatively small, equal rotations of the shaft produce relatively large movements of the valving element, so making valve opening relatively rapid compared with the aforedescribed valves of known type.

The cam 15 also presents at its rear two levers 17 and 18 substantially rigid therewith, each arranged to contact a relative switch 100 and 101 for switching off the motor 12. In practice at each 180° rotation of the cam, one of the levers 17 or 18 comes into contact with one of the two operating switches 100 and 101 for the motor 12. This contact interrupts power to the motor, to halt it and lock the valving element 8 in the relative open or closed position of the valve 1. Said switches are rigid with and electrically connected to an electronic card 19 which controls the operation of the motor 12.

The motor 12 is housed in a casing 30 and is rigidly fixed to it; the shaft 121 and the cam 15 located on it at least partly project from the casing 30 through an open mouth 31 thereof. For its part the cam follower 16 is positioned within a hollow housing 33 provided in the upper portion of the valve body 2, the housing 33 possessing a port defining a seat 32 into which the mouth 31 of the casing 30 can be inserted and fixed, so fixing this casing to the valve body 2. With the casing 30 associated with the body 2 in this manner, the cam 15 lies inserted within the cam follower 16, with the two levers in the correct position for contacting the respective switch 100 and 101. The card 19 and the switches 100 and 101 are at least partly inserted into and rigid with the casing 30, and partly project from it through its mouth 31.

The motor 12 and the other members rigid therewith (cam 15, card 19 and relative switches) are mounted or demounted by simply positioning the casing 30 at the top of the body 2 and then engaging the mouth 31 with the seat 32 or, respectively, by disengaging these latter and removing the casing. This aspect enables the valve motor to be easily and quickly changed, for example in the case of malfunction.

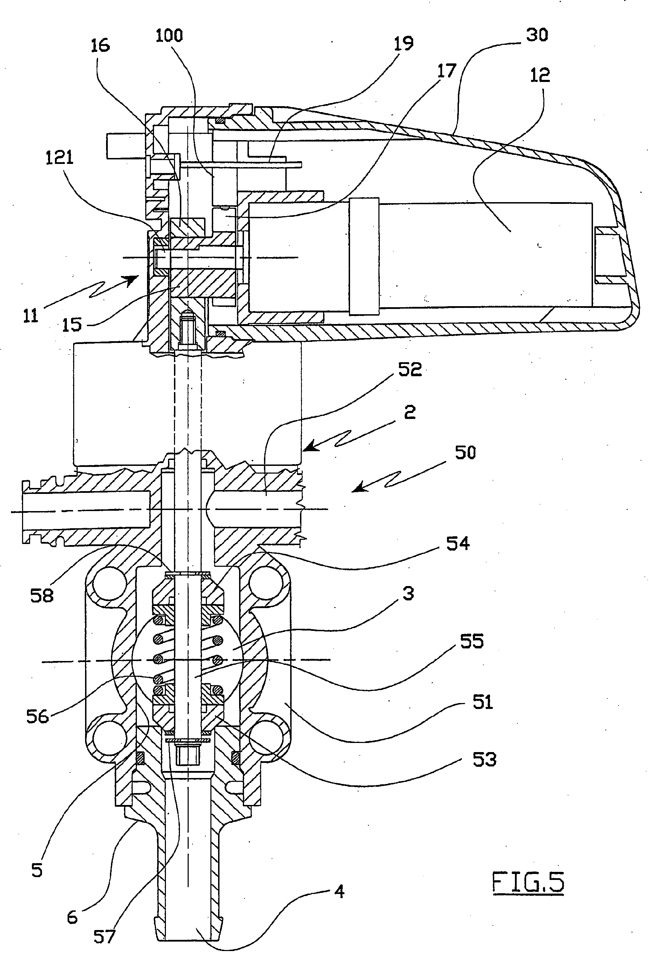

A variant of the invention shown in Figure 5 is described hereinafter, in which those components already described in the first embodiment of the invention are indicated by the same reference numerals.

Figure 5 shows a valve 50, the body 51 of which presents an inlet conduit 3 and two outlet conduits 4 and 52. With each outlet conduit 4 and 52 there is associated a valving element 53 and 54 which acts on a respective valve seat provided at one end of the conduits 4 and 52.

Said valving elements 53 and 54 are mounted on a stem 55 and maintained normally resting against a respective travel limit ring 57, 58 by the action of a spring 56 mounted on the stem 55 between said valving elements 53 and 54. The upper end of the stem 55 is connected by the aforedescribed mechanical connection means 11 to the motor 12, which when operated produces translation of the stem.

In a further variant, not shown, the valving elements are rigid with the stem and are hence unable to translate relative to it. This latter variant does not use either the spring 13 or 56 or the travel limit ring 10, 57. 58.

Numerous modifications of a practical or applicational nature can be made to the invention, but without leaving the scope of the inventive idea as defined in the appended claims.

## Claims

1. A motor-operated valve for fluid shutoff comprising at least one movable valving element (8, 53, 54) for fluid shutoff, operated by a motor (12) via mechanical connection means (11) arranged to position it in an open position in which fluid passage is enabled, and in a closed position in which it shuts off fluid passage, wherein said mechanical means (11) comprise at least one cam element (15) rigid with said motor (12) and a cam follower (16) associated with said valving element (8, 53, 54), **characterised in that** said cam element (15) is rigidly associated with two levers (17, 18), each provided to operate, after a 180° rotation of the cam (15), a respective switch (100, 101) arranged to interrupt operation of the motor (12).

2. A valve as claimed in claim 1**, characterised in that** said cam element is an eccentric circular cam (15).

3. A valve as claimed in claim 1, **characterised in that** said cam follower (16) comprises at least a portion (161) contactingly bearing on said cam element (15).

4. A valve as claimed in claims 1 and 2, **characterised in that** said cam follower (16) is in the form of a frame able to internally receive said cam element (15).

5. A valve as claimed in claim 1, **characterised in that** said switches (100, 101) are located on a single electronic card (198) for operating the motor (12).

6. A valve as claimed in claim 1, **characterised in that** the motor (12) is housed in a casing (30) rigid therewith and having a mouth (31) through which the shaft (121) and the cam (15) at least partly project, the cam follower (16) being positioned in a hollow housing (33) provided in the valve body (2), said housing (33) possessing a port defining a seat (32) into which the mouth (31) of the casing (30) can be inserted and locked, the cam (15) lying inserted within the cam follower (16), with the two levers (17 and 18) in the correct position for contacting the respective switch (100 and 101), when the casing (30) is associated with the body (2).

## Patentansprüche

1. Ein motorgetriebenes Ventil zum Absperren einer Flüssigkeit, welches zumindest ein bewegliches Ventilelement (8, 53, 54) zum Absperren einer Flüssigkeit aufweist, angetrieben von einem Motor (12) über eine mechanische Vorrichtung (11) zur Positionierung desselben in einer offenen Position, in der die Flüssigkeit durchfließen kann, und in einer geschlossenen Position, in der es das Durchfließen der Flüssigkeit absperrt, wobei die besagte mechanische Vorrichtung (11) zumindest ein Nockenelement (15) umfasst, das starr mit dem besagten Motor (12) verbunden ist, und einen Nockenstößel (16), der mit dem besagten Ventilelement (8, 53, 54) verbunden ist, **dadurch gekennzeichnet, dass** das besagten Nockenelement (15) starr mit zwei Hebeln (17, 18) verbunden ist, die jeweils nach einer Rotation des Nocken (15) um 180° einen entsprechenden Schalter (100, 101) zur Unterbrechung des Betriebs des Motors (12) betätigen.

2. Ein Ventil gemäß Anspruch 1, **dadurch gekennzeichnet, dass** das besagte Nockenelement ein runder Exzentemocken (15) ist.

3. Ein Ventil gemäß Anspruch 1, **dadurch gekennzeichnet, dass** der besagten Nockenstößel (16) zumindest einen Teil (161) aufweist, der mit dem besagten Nockenelement (15) in Kontakt steht.

4. Ein Ventil gemäß den Ansprüchen 1 und 2, **dadurch gekennzeichnet, dass** der besagte Nockenstößel (16) die Form eines Rahmens aufweist, der innen das besagte Nockenelement (15) aufnehmen kann.

5. Ein Ventil gemäß Anspruch 1, **dadurch gekennzeichnet, dass** sich die besagten Schalter (100, 101) auf einer einzigen elektronischen Karte (198) für die Steuerung des Motors (12) befinden.

6. Ein Ventil gemäß Anspruch 1, **dadurch gekennzeichnet, dass** sich der Motor (12) in einem damit starr verbundenem Gehäuse (30) mit einer Öffnung (31) befindet, durch die die Welle (121) und der Nocken (15) zumindest teilweise vorstehen, sowie **dadurch**, dass der Nockenstößel (16) in einem hohlen Gehäuse (33) im Ventilkörper (2) positioniert ist, wobei das besagte Gehäuse (33) einen Anschluss aufweist, der einen Sitz (32) bildet, in den die Öffnung (31) des Gehäuses (30) eingesteckt und versperrt werden kann, wobei der Nocken (15) in den Nockenstößel (16) eingeführt liegt, mit den beiden Hebeln (17 und 18) in der korrekten Position für die Betätigung des jeweiligen Schalters (100 und 101), wenn das Gehäuse (30) mit dem Körper (2) verbunden ist.

## Revendications

1. Une valve motorisée pour l'arrêt d'un fluide comprenant au moins un élément mobile (8, 53, 54) pour l'arrêt d'un fluide, actionné par un moteur (12) par l'intermédiaire d'un dispositif de liaison mécanique (11) disposé pour le placer dans une position ouverte, dans laquelle le passage du fluide est possible, et dans une position fermée, dans laquelle il arrête le passage du fluide, où ledit dispositif mécanique (11) comprend au moins un élément de came (15) rigide avec ledit moteur (12) et un galet de came (16) associé audit élément mobile (8, 53, 54), **caractérisée par le fait que** ledit élément de came (15) est associé de façon rigide avec deux leviers (17, 18), prévus pour actionner, après une rotation à 180° de la came (15), un interrupteur correspondant (100,101) disposé pour interrompre le fonctionnement du moteur (12).

2. Une valve selon la revendication 1, **caractérisée par le fait que** ledit élément de came est une came circulaire excentrique (15).

3. Une valve selon la revendication 1, **caractérisée par le fait que** ledit galet de came (16) comprend au moins une portion (161) reposant par contact sur ledit élément de came (15).

4. Une valve selon les revendications 1 et 2, **caractérisée par le fait que** ledit galet de came (16) a la forme d'un châssis dont l'intérieur peut recevoir ledit élément de came (15).

5. Une valve selon la revendication 1, **caractérisée par le fait que** lesdits interrupteurs (100, 101) sont placés sur une seule carte électronique (198) pour l'actionnement du moteur (12).

6. Une valve selon la revendication 1, **caractérisée par le fait que** le moteur (12) est logé dans un carter (30) rigide avec ce dernier et disposant d'une bouche (31) à travers laquelle passent au moins partiellement l'arbre (121) et la came (15), le galet de came (16) étant positionné dans un logement creux (33) prévu dans le corps de la valve (2), ledit logement (33) possédant un orifice qui définit un siège (32) dans lequel la bouche (31) du carter (30) peut être introduite et verrouillée, la came (15) reposant introduite dans le galet de came (16), avec les deux leviers (17 et 18) dans la position correcte pour toucher les interrupteurs correspondants (100 et 101), lorsque le carter (30) est associé avec le corps (2).
